# EUROPEAN PATENT SPECIFICATION

(11) **EP 4 376 993 B1**
(45) Date of publication and mention of the grant of the patent: **03.09.2025**
(21) Application number: 22750883.5
(22) Date of filing: 27.07.2022
(51) Int. Cl.: B01J 3/02, C10G 1/00, C10G 1/06, C10G 3/00

(54) **SYSTEM AND METHOD FOR CONVERTING WASTE CARBON MATERIAL INTO BIO-CRUDE AND NUTRIENTS USING HYDROTHERMAL LIQUEFACTION**
SYSTEM UND VERFAHREN ZUR UMWANDLUNG VON KOHLENSTOFFABFALLMATERIAL IN BIOROHÖL UND NÄHRSTOFFE MITTELS HYDROTHERMALER VERFLÜSSIGUNG
SYSTÈME ET PROCÉDÉ DE CONVERSION DE DÉCHETS DE CARBONE EN BIO-PÉTROLE BRUT ET EN NUTRIMENTS PAR LIQUÉFACTION HYDROTHERMALE

(30) Priority: 27.07.2021 GB 202110761
(43) Date of publication of application: 05.06.2024
(73) Proprietor: Purifire Labs Limited, Cambridge CB1 2LA (GB)
(72) Inventor: PEARCE, Matthew, Cambridge CB1 2LA (GB); MIDDLETON, Ray, Cambridge CB1 2LA (GB)
(74) Representative: Titmus, Craig Edward
(86) International application number: PCT/GB2022/051968
(87) International publication number: WO 2023/007156

(56) References cited:
- WO-A1-2021/121526
- WO-A1-2021/141866
- CN-B- 113 198 391
- CHENG FENG ET AL: "Bio-crude oil from hydrothermal liquefaction of wastewater microalgae in a pilot-scale continuous flow reactor", BIORESOURCE TECHNOLOGY, ELSEVIER, AMSTERDAM, NL, vol. 294, 21 September 2019 (2019-09-21), XP085880777, ISSN: 0960-8524, [retrieved on 20190921], DOI: 10.1016/J.BIORTECH.2019.122184

## Description

### TECHNICAL FIELD

The present disclosure relates generally to systems and methods for hydrothermal liquefaction; and more specifically, to conversion of waste carbon material into bio-crude and nutrients using hydrothermal liquefaction. In some instances, systems and methods for hydrothermal liquefaction according to the invention utilise a plurality of heating formats.

### BACKGROUND

Globally, waste has become a significant issue in the world. Notably, massive volumes of waste generated annually causes pollution, such as for example, land pollution, water pollution and so forth. Specifically, 6,300,000,000 tons of plastic waste has been generated by humans and the production is expected to increase to 1,800 million tons per year by 2050. Presently, only 9% of plastic waste is recycled, 12% is incinerated and 80% has ended up in landfill. In such a context, attempts have been made to develop several methods for recycling and reusing a plastic waste without pollution, and for effectively utilizing the recycled plastics as resources. Additionally, one such method is hydrothermal liquefaction. Herein, hydrothermal liquefaction is a process for converting biomass, or other carbon-containing material and water to bio-oil, bio-char and organic gas fractions. Subsequently, the process is conducted in absence of oxygen at high pressure and at temperatures between 250 degrees Celsius and 350 degrees Celsius. Currently, heat required to initiate hydrothermal liquefaction is supplied either by combustion of fuels, or electricity.

Notably, supplying heat using combustion of fuels from industries or electricity is problematic as the energy return upon creation of bio-crude is too costly both energetically and economically. Additionally, the net gain in energy provision comes at the expense of the pre-combustion of other fuels, negating the formation of a renewable form of bio-crude.

Typically, a boiler generates steam for a turbine at high temperature and pressure. However, this process is wasteful because the exhaust steam is generally vented via a large cooling tower and is not used in any form. Additionally, by not exploiting this high energy waste stream process which has been produced at high cost in the boiler, potential energy and money is lost. Moreover, garbage incineration power generation can be used with a garbage disposal method coordinated with standard electrical generation. Herein, exhaust gas heat from incineration of garbage is used to make steam. Furthermore, the steam is used to hydrolyse garbage and fuel procured from hydrolysed garbage is used as a supplementary fuel for the incineration of garbage. However, this process does not store the fuel, but produces and consumes it in-situ. Furthermore, a modular high pressure processing system comprises pressurization and separation devices. Herein, the modular processing system is used with a conversion section. However, the modular processing system does not give the flexibility to be able to test multiple waste carbon material and rapidly change input parameters of waste carbon materials in accordance with university testing experimental protocol requirements.

Therefore, in light of the foregoing discussion, there exists a need to overcome the aforementioned drawbacks associated with hydrothermal liquefaction process.

WO 2021/121526 mentions cost efficient integration of hydrothermal liquefaction and wet oxidation wastewater treatment. Cheng F, Jarvis JM, Yu J, Jena U, Nirmalakhandan N, Schaub TM, Brewer CE. Bioresour Technol. 2019 Dec;294:122184. (doi: 10.1016/j.biortech.2019.122184. Epub 2019 Sep 21. PMID: 31683452.) mentions bio-crude oil from hydrothermal liquefaction of wastewater microalgae in a pilot-scale continuous flow reactor.

### SUMMARY

The invention is defined according to the claims.

The present disclosure seeks to provide a system for converting waste carbon material into bio-crude and nutrients using hydrothermal liquefaction. The present disclosure also seeks to provide a method for converting waste carbon material into bio-crude and nutrients using hydrothermal liquefaction. An aim of the present disclosure is to provide a solution that overcomes at least partially the problems encountered in prior art.

The present invention provides a system for converting waste carbon material into bio-crude and nutrients using hydrothermal liquefaction, the system comprising:
- a mixing and recirculation tank configured to receive the waste carbon material to undergo hydrothermal liquefaction;
- a hydraulic pumping unit configured to mix waste carbon material with water and to increase the pressure of the mixture of waste carbon material and water;
- a plug flow reactor configured to maintain the pressure of the mixture of the waste carbon material and water;
wherein the plug flow reactor forms a single pressure chamber continuum comprising:
- a preheater configured to increase temperature of the mixture of waste carbon material and water to obtain waste flow;
- a hydrothermal reactor unit configured to receive the waste flow from the preheater, wherein the hydrothermal reactor unit is configured to convert the waste flow into bio-crude and nutrients ; and
- a back pressure valve positioned downstream of the hydrothermal reactor unit.

In some embodiments, the plug flow reactor is configured to enable continuous flow of the mixture of waste carbon material and water to the preheater and the hydrothermal reactor unit.

In some embodiments, the plug flow reactor is configured to maintain pressure of the waste carbon material and water mixture at about 150 bar.

The plug flow reactor comprises a back pressure valve positioned downstream of the hydrothermal reactor unit.

In some embodiments, the hydrothermal reactor unit comprises a heater for increasing the temperature of the waste flow using a plurality of heating formats.

In some embodiments, the hydrothermal reactor unit comprises a conduit configured to partially recirculate waste heat into the hydrothermal reactor unit.

In some embodiments, the system further comprises a processing electronics module configured to regulate and control flowrates, temperatures and pressures in the system.

In some embodiments, the plurality of heating formats in the hydrothermal reactor unit comprises at least one of: steam turbine waste heat; geothermal heat; waste heat from internal combustion engines; solar heat from solar concentrating parabolic troughs; and waste heat from combustion of bio-crude produced from hydrothermal liquefaction.

In some embodiments, the preheater comprises a second plurality of heating formats to increase the temperature of the mixture of waste carbon material and water.

In some embodiments, the plug flow reactor is tubular in structure.

In some embodiments, the hydraulic pumping unit comprises a double acting piston.

In some embodiments, a temperature capacity of the hydrothermal reactor unit is 700 degrees Celsius, a pressure capacity of the hydrothermal reactor unit is 400 bars and flow rate capacity thereof is 100 kilograms per hour.

In some embodiments, the preheater is configured to increase temperature of the mixture of waste carbon material and water up to 350 degrees Celsius, e.g., to between 250 and 350 degrees Celcius.

The present invention also provides a method for converting waste carbon material into bio-crude and nutrients using hydrothermal liquefaction, the method comprising:
- receiving the waste carbon material configured to undergo hydrothermal liquefaction;
- mixing waste carbon material with water;
- increasing pressure of mixture of the waste carbon material and water using a hydraulic pumping unit to provide a pressurised mixture of waste carbon material and water;
- transferring the pressurised mixture of waste carbon material and water to a plug flow reactor , wherein the plug flow reactor forms a single pressure chamber continuum comprising a preheater, a hydrothermal reactor unit and a back pressure valve positioned downstream of the hydrothermal reactor unit,
   wherein the plug flow reactor is configured to maintain the pressure of the mixture of the waste carbon material and water;
- increasing temperature of the mixture of waste carbon material and water in the preheater to obtain waste flow; and
- converting the waste flow into bio-crude and nutrients in the hydrothermal reactor unit by increasing the temperature of the waste flow.

In some embodiments, the method of the invention is performed using the system of the invention.

In some embodiments, increasing the temperature of the waste flow comprises using a plurality of heating formats.

In some embodiments, the method comprises recirculating waste heat from the hydrothermal reactor unit into the waste flow.

In some embodiments, the method further comprises decreasing temperature and pressure of the bio-crude and nutrients.

In some embodiments, the plurality of heating formats comprise at least one of: steam turbine waste heat; geothermal heat; waste heat from internal combustion engines; solar heat from solar concentrating parabolic troughs; and waste heat from combustion of bio-crude produced.

In some embodiments, the preheater comprises a second plurality of heating formats to increase the temperature of the mixture of waste carbon material and water.

In some embodiments, the method comprises increasing the temperature of the waste flow up to 700 degrees Celsius and pressure thereof up to 400 bars.

In some embodiments, the method comprises increasing temperature of the mixture of waste carbon material and water up to 350 degrees Celsius, e.g., to between 250 and 250 degrees Celcius.

Embodiments of the present disclosure substantially eliminate or at least partially address the aforementioned problems in the prior art, and enable efficient conversion of waste carbon material into bio-crude and nutrients.

In the system of the invention, the hydrothermal liquefaction reactor is part of a plug flow reactor which forms a single pressure chamber continuum. Advantageously, the use of a single continuous pressure chamber (referred to herein as the plug flow reactor) allows the use of less equipment and enables lower-cost processing as compared to modular systems. The continuous plug flow reactor also reduces issues associated with restriction and/or modification of flow rate and internal pressure changes between adjacent chambers of a modular system, because pressure is maintained at a constant level throughout the plug flow reactor. A further benefit of the plug flow reactor is that pressure can be regulated independently of temperature and/or super-heated steam accumulation by means of the hydraulic pumping unit at the input end of the plug flow reactor, and a back pressure valve at the output end of the plug flow reactor.

The plug flow reactor comprises a back pressure valve at the output end. Back pressure valves are not routinely used on multi-phase flow materials, i.e. solid, liquid and gas mixtures, because they can clog. The high pressure and temperature achieved by the plug flow reactor of the invention results in changes to the material states of the waste carbon material from solid at the input end to liquids and gases at the output end. Therefore, by the time the waste carbon material reaches the back pressure valve, solids that cannot conventionally go through a back pressure valve due to the problem of clogging have been converted into liquids that can easily pass through the back pressure valve at the outlet end.

Advantageously, the hydraulic pumping unit results in less equipment and lower-cost processing methodologies than systems requiring a single or double hydraulic peristaltic pump.

The ability to control pressure within the plug flow reactor via the hydraulic pumping unit enables the system of the invention to be used to produce various desired outputs, e.g. char, oil, and/or gas from hydrothermal carbonisation, hydrothermal liquefaction and hydrothermal gasification respectively. Thus, the system of the invention is simple, resilient, and adaptable.

In some embodiments, feedstock intake is by means of negative pressure air chamber and back pressurisation intake valves directly into the mixing and recirculation tank that can act in synchronicity with cyclical hydraulic piston injection of waste feedstock.

The plug flow reactor comprises regions with distinct heating profiles, e.g. the heated hydrothermal reactor and the subsequent cooling zone. In some embodiments, regions with distinct heating profiles are isolated by thermal barriers, e.g. heat-blocking thermal barriers. In some embodiments, heat-blocking thermal barriers isolate the cross-sectional surface area of the reactor chamber throughput the hydrothermal liquefaction reaction heating and cooling zones (comprising lower temperature thermal barriers) such as water / ethylene glycol or other organic liquid mixtures. These thermal barriers advantageously circumnavigate the prerequisite utilisation of more expensive internal pressure flow valves which are tolerant to high extremes of both pressure and temperature. Consequently lower-cost pressure valves are able to be utilised at lower thermal tolerance and pressure criterion and with less specialist material characteristic outside of the zones of higher heat and pressure. Thermal barriers are constituted by multiple physical manifestations, as external conductive heating, insulation and coolant zones.

In some embodiments, the system comprises inverter-controlled resistance heating or induction heating over the whole length of the plug flow reactor. This ensures that the primary heating system provides the bulk of the heating with insulation and maintenance heating on the output end, maintaining the reaction conditions at the desired temperature. With cost-effective insulation, the plug flow reactor of the invention has the capacity to be versatile and extend the active conditions of the reactor pressure and temperature zones, especially given the wall thickness required to maintain the high pressure of the reactor and proceeding pressure tubes and low thermal conductivity of stainless steel.

In some embodiments, the thermal conductivity of the hydrothermal reactor is increased by provision of an aluminium block heater over the hydrothermal liquefaction reactor. This aluminium block provides an inversed heat sync, which helps get heat into the reactor through the external reactor vessel walls directly and cost effectively, without excessive heat loss to the environment, thereby maximising energy consumption and utilisation.

In some embodiments, the system comprises a "hot-valve" at the output end of the plug flow reactor. During priming of the system upon first use and when the reactor contents are exposed to atmospheric air, the detrimental effects of oxygen accumulation from air into the portion of the equipment downstream of the reactor can be negated, as well as ensuring that the reactor is maintained at the optimised operational pressure of 150 bar during "heat-up" from ambient to 350C. It is important to ensure that the system can be pressurised before, and during heating, because failure to do so exposes waste carbon material to hydrothermal carbonisation forming temperatures at 150-250C and <120 bar (char or charcoal-like formation), rather than the preferential hydrothermal liquefaction that only occurs during the window band range of about 250C to 370C and 120-150 bar. Consequently, the system of the invention enables the user to control product formation, maximising oil and aqueous fractions without undesired char formation that could potentially and detrimentally block the back pressure valve.

The system of the invention typically provides for linear flow of waste feedstock through at least four zones: a cold waste feedstock intake zone; a pre-heat zone; a heat maintenance zone including the hydrothermal liquefaction reactor; and a cooling zone following the hydrothermal liquefaction reactor.

The system of the invention facilitates multiple combination set-ups comprising variable volumetric reactor chambers, temperature profiles and heating methods. These are constituted by multiple volumetric reaction chambers enabled to be re-positioned for smaller or larger experiments. Consequently, hydrothermal pyrolysis, liquefaction or gasification at a range of temperatures between ambient and 700°C; are able to be provided with multiple heating inputs from either fuels', electricity or solar energy. Advantageously, this reactor system is able to be operationally processed within 2 hours, with a 20-minute turnaround time in between variable configurations of experiments. This set-up enables operatives to increase frequency rate and experimental research into hydrothermal liquefaction, pyrolysis and gasification technologies without requiring separate equipment to specialise these activities.

Additional aspects, advantages, features and objects of the present disclosure would be made apparent from the drawings and the detailed description of the illustrative embodiments construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
- FIG.1: is a schematic representation of an exemplary system according to the invention comprising a mixing and recirculation tank, hydraulic pumping unit, and plug flow reactor with preheater, hydrothermal liquefaction reactor, and back pressure valve.
- FIG.2: is a schematic illustration shown to depict a system for hydrothermal liquefaction, in accordance with an embodiment of the present disclosure.
- FIG. 3: is a flowchart depicting steps of a method for converting waste carbon material into bio-crude and nutrients using hydrothermal liquefaction, in accordance with an implementation of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In one aspect, the present disclosure provides a system converting waste carbon material into bio-crude and nutrients using hydrothermal liquefaction, the system comprising:
- a mixing and recirculation tank configured to receive the waste carbon material to undergo hydrothermal liquefaction;
- a hydraulic pumping unit configured to mix waste carbon material with water;
- a plug flow reactor configured to increase pressure of mixture of the waste carbon material and water;
- a preheater configured to increase temperature of the mixture of waste carbon material and water to obtain waste flow; and
- a hydrothermal reactor unit configured to receive the waste flow from the preheater, the hydrothermal reactor unit comprising
   - a heater for increasing the temperature of the waste flow using a plurality of heating formats;
   - a conduit configured to partially recirculate waste heat into the hydrothermal reactor unit;
wherein the hydrothermal reactor unit is configured to convert the waste flow into bio-crude and nutrients.

In another aspect, the present disclosure provides a method for converting waste carbon material into bio-crude and nutrients using hydrothermal liquefaction, the method comprising:
- receiving the waste carbon material configured to undergo hydrothermal liquefaction;
- mixing waste carbon material with water;
- increasing pressure of mixture of the waste carbon material and water;
- increasing temperature of the mixture of waste carbon material and water to obtain waste flow; and
- converting the waste flow into bio-crude and nutrients by
   - increasing the temperature of the waste flow using a plurality of heating formats; and
   - configuring a conduit to partially recirculate waste heat into the waste flow.

The present disclosure provides the aforementioned system and method for efficient conversion of waste carbon material to bio-crude and nutrients via hydrothermal liquefaction. Specifically, hydrothermal liquefaction is a waste processing technology. Herein, the waste used in hydrothermal liquefaction comprises waste carbon material of all types and form. In the present disclosure, temperature capacity of a hydrothermal reactor unit may reach higher than the temperature capacity of steam. In some embodiments, the heater present inside the hydrothermal reactor unit is powered by waste heat from industries, solar heat, and waste heat after further combustion of waste carbon material left over after formation of bio-crude and nutrients.

Additionally, the system of the invention presents scientists and academics, with a professional scientific apparatus for processing waste feedstocks whereby the scientists and the academics will be able to assess and analyse multiple batches of waste carbon material samples sequentially in a system comprising continuous hydrothermal liquefaction. Notably, the system of the invention has potential for upscaling via steam turbine electricity generation. Herein, the steam turbine electricity generation has capacity to upscale the potential of the system of the invention from the professional scientific apparatus of 100 litres per hour to 10,000 tonnes per hour steam turbine derived heat source hydrothermal liquefaction production system.

Advantageously, the system of the invention enables multiple series of experiments with different variables to be performed in a short time, due to the ability for the equipment to be emptied, cleaned, re-filled and re-operated in quick succession.

Throughout the present disclosure, the term *"hydrothermal liquefaction"* refers to a thermochemical process carried out in an enclosed hydrothermal reactor unit to convert waste carbon materials having a high moisture content into bio-crude and nutrients. Furthermore, presence of water is important in the hydrothermal liquefaction process. Additionally, process of hydrothermal liquefaction is conducted at high pressures and high temperature lying in a range from 250 degrees Celsius to 350 degrees Celsius in the absence of oxygen. The high temperature may for example be from 250, 275, 300 or 325 degrees Celsius up to 275, 300, 325 or 350 degrees Celsius. Furthermore, hydrothermal liquefaction is a fast process with a low residence time. Herein, the term *"residence time"* is defined as the average length of time during which a mixture of waste carbon material and water is present inside a hydrothermal reactor unit. Residence time is the minimum time taken for exposure of the waste carbon material within the reactor to convert into the desired output products for hydrothermal carbonisation, liquefaction or gasification. For hydrothermal liquefaction, residence time ranges from about 20 minutes to about 60 minutes, e.g. from about 25 minutes, about 30 minutes, or about 35 minutes to about 55 minutes, 50 minutes, 45 minutes or 40 minutes.

Furthermore, the system used for hydrothermal liquefaction in the present disclosure is well suited to lower production throughputs analogous to academics comprising research and development, wherein flow rate may be maintained from 1 kilogram per hour up to 50 kilograms per hour. The flow rate may for example be maintained at 1, 15, 30 or 45 kilograms per hour up to 15, 30, 45 or 50 kilograms per hour.

Additionally, the system of the invention may be upscaled and used for hydrothermal liquefaction which is aligned to higher production throughputs analogous to the steam turbine derived heat source hydrothermal liquefaction production system, wherein the flow rate may be maintained from 100 kilograms per hour up to 10,000 tonnes per hour. Moreover, the system used for hydrothermal liquefaction in the present disclosure may fluctuate between different pressures and temperatures to accommodate different types of waste carbon material and therefore accommodate either hydrothermal carbonisation or hydrothermal liquefaction or hydrothermal gasification, or pyrolysis. Herein, approximate temperature for hydrothermal carbonisation is 150 degrees Celsius up to 250 degrees Celsius, for hydrothermal liquefaction is 250 degrees Celsius up to 370 degrees Celsius, for hydrothermal gasification is 370 degrees Celsius up to 500 degrees Celsius, and for pyrolysis is 500 degrees Celsius up to 800 degrees Celsius. The approximate temperature for hydrothermal carbonisation may be from 150, 175, 200 or 225 degrees Celsius up to 175, 200, 225 or 250 degrees Celsius. The approximate temperature for hydrothermal liquefaction may be from 250, 275, 300, 325 or 350 degrees Celsius up to 275, 300, 325, 350 or 370 degrees Celsius. The approximate temperature for hydrothermal gasification may be from 370, 375 or 380 degrees Celsius up to 375, 380, 400, 420 or 440 degrees Celsius. The approximate temperature for pyrolysis may be from 500, 550, 600, 650 or 700 degrees Celsius up to 550, 600, 650, 700, 750 or 800 degrees Celsius.

Throughout the present disclosure, the term *"waste carbon material"* refers to carbon-rich resources that are generally discarded as unusable materials or trash. Herein, the waste carbon material may include any carbon material in a solid, liquid or gaseous state. Furthermore, the waste carbon material in the present disclosure may include, but is not limited to, solid products, liquid products, municipal solid waste, urban waste, forestry waste, plant materials, wood waste, fermentation waste, byproduct of bio-crude, plastic waste, polymer waste, food waste, food process waste, sewage sludges, livestock waste, agricultural waste, plural waste, or combinations thereof.

The system comprises a mixing and recirculation tank configured to receive the waste carbon material to undergo hydrothermal liquefaction. In some embodiments, the mixing and recirculation tank contains a small amount of pre-existing water to be mixed with waste carbon material. In some embodiments, waste carbon material is mixed with water in the mixing and recirculation tank at a temperature from 60 degrees Celsius up to 70 degrees Celsius. The mixing and recirculation tank may for example contain water mixed with waste carbon material at temperatures 60, 62, 64, 66 or 68 degrees Celsius up to 62, 64, 66, 68 or 70 degrees Celsius. Furthermore, the mixing and recirculation tank may have a capacity of 30 litres. The mixing and recirculation tank may have a capacity of at least 30 litres, at least 40 litres, at least 50 litres, at least 60 litres, at least 70 litres, at least 80 litres, at least 90 litres, or at least 100 litres.

In some embodiments, a motor is operatively coupled with the mixing and recirculation tank. In some embodiments, the motor is used for thorough mixing of the waste carbon materials with the small amount of pre-existing water. In some embodiments, the mixing and recirculation tank is a partially negative pressurized vessel. Advantageously, a negatively pressurized mixing and recirculation tank promotes injection of the waste carbon material into the hydraulic piston chamber during refilling of the piston stroke. Moreover, the mixing and recirculation tank acts as a pre-feeder into a hydraulic pumping unit.

In some embodiments, the waste carbon material is introduced into the mixing and recirculation tank by a piston plunger.

The system comprises a hydraulic pumping unit configured to mix waste carbon material with water and to increase the pressure of the waste carbon material and water mixture. The hydraulic pumping unit typically comprises a hydraulic chamber for receiving waste carbon material from the mixing and recirculation tank and water, and a hydraulic piston for compressing the waste carbon material within the hydraulic chamber. The hydraulic chamber typically comprises: (a) a feed intake chamber valve through which waste carbon material inters the hydraulic chamber; and (b) a manually or automatically activated hydraulic valve for releasing the pressurised waste carbon material and water mixture from the hydraulic chamber into the plug flow reactor. When the piston moves forward, the feed intake chamber valve is closed and the hydraulic valve at the end of the hydraulic pumping unit is open. When the piston moves back the hydraulic valve at the end of the hydraulic pumping unit is closed and the feed intake chamber valve is open. The two valves thus operate in asymmetric synchronicity, i.e. one is open when the other is closed.

As described above, the waste carbon material is pressurized by the hydraulic piston before entering a plug flow reactor via an ambient temperature manually or automatically actuated hydraulic valve. The hydraulic valve separates the cold pressurised zone from the hot pressurised zone via the cooling thermal barrier on the outlet end of the hydraulic valve. Beneficially, this means that heat is concentrated in the reaction zone and does not permeate backwards due to the forward motion of the pressurised waste carbon material and water mixture being heated. The hydraulic piston creates the pressure. The plug flow reactor provides the thermal barrier and pressure tolerance to maintain the desired heat and pressure for the duration of the reaction. In some embodiments, the pressure is maintained at 200 bars. In some embodiments, the system of the invention can tolerate ranges of pressure between 50 bar and 300 bar, with ideal pressure of between 100 and 200 bar. Additionally, the hydraulic pumping unit may have a capacity of at least 10 litres. Moreover, the hydraulic pumping unit may have a power capacity of 10 Kilowatts.

In some embodiments, the hydraulic pumping unit is coupled with a high-pressure pump. In some embodiments, the high pressure pump pumps waste carbon and water material into the hydraulic pumping unit hydraulic chamber under partial negative pressure of the negative pressurized vessel via a linking conduit containing a hydraulic valve. The hydraulic valves at the end of the piston and at the end of the high pressure waste carbon feed pump act in alternating unison - i.e. upon beginning forward motion and pressurisation of the hydraulic pumping unit, the high pressure waste carbon feed intake pump valve is closed, and the hydraulic valve on the outlet of the hydraulic pumping unit connecting to the reaction chamber is open. Conversely, at the end of the hydraulic piston stroke and upon the return of the piston head stroke to a subsequent hydraulic refill charge, the hydraulic valve on the outlet of the hydraulic pumping unit connecting to the reaction chamber is closed, and the high pressure waste carbon feed intake pump valve is open, to re-charge the hydraulic pumping unit with waste carbon and water material. Herein, pressure in the high-pressure pump is maintained from 100 bars up to 400 bars. The pressure may for example be maintained at 100, 150, 200, 250, 300 or 350 bars up to 150, 200, 250, 300, 350 or 400 bars. Specifically, the waste carbon material may be maintained at pressure of 150 bars for the duration of residence time.

In an embodiment, the hydraulic pumping unit is operatively coupled with a flow control unit. The flow control unit is a function of volumetric capacity measured by the known cross-sectional area, length and hence volume of the piston cycle. A length-rule marker on the piston and the time for the piston to complete its cycle enables the operator to know how much volume of waste carbon material has entered the chamber, as a result of the waste to liquids mixture ratio make-up in the mixing tank.

Additionally the flow control unit may be supported by either constant or pulsed hydraulics that can either be constant or timed with 3 seconds on, 57 seconds off; or 5 seconds on, 55 seconds off; or 20 seconds on, 40 seconds off etc. Herein, the flow control unit comprises a processing electronics module to control the flow of the waste carbon material.

In some embodiments, the waste carbon material flows from the mixing and recirculation tank (or a feed recharge cylinder located between the mixing and recirculation tank and the hydraulic chamber) to a feeder head and feed cylinder. Herein, the hydraulic slave cylinder is a smaller cylinder connected to the high-pressure pump. The hydraulic pumping unit completes successive piston charges, but does not "know" when a piston cycle has been completed. To mitigate this, an added feature of a control return switch engages at the culmination of each piston cycle, interceding with the electronic interface system to return the piston to its refill charge position. As the piston gets to the end of its cycle, it pushes against an electronic control push switch, sending a signal for the piston to return to its start position. Furthermore, the hydraulic slave cylinder and the high-pressure pump are parts of the hydraulic pumping unit for engaging a clutch. Subsequently, when the clutch is pushed, a plunge inside the high-pressure pump forces high pressure through to the hydraulic slave cylinder. Additionally, a piston indicator is operatively coupled to the hydraulic slave cylinder. Herein, the piston indicator is a mechanical indicator comprising piston, spring, stylus and recording system. Typically, the piston indicator indicates the volume of the waste carbon material when the waste carbon material pushes against the spring, creating a linear relationship between the pressure of the volume of the waste carbon material and deflection of the piston against the spring.

The pressurised waste carbon material and water mixture exits the hydraulic pumping unit via the hydraulic valve and enters the plug flow reactor. The plug flow reactor is configured to maintain the pressure of the mixture of waste carbon material and water. Herein, the plug flow reactor may be configured as one long tube or a number of shorter tubes for reconfiguration. Furthermore, the mixture of waste carbon material and water is introduced to the plug flow reactor continuously and moves through the plug flow reactor. Additionally, the plug flow reactor comprises a forward flow rate and a reverse flow rate. Herein, the forward flow rate may have a value of 1 litre per minute, and the reverse flow rate may possibly have a value of 5 litres per minute.

In some embodiments, the plug flow reactor comprises a feeder head. The feeder head is the intermediary ported component between the hydraulic pumping unit, plug flow reactor and mixing and recirculation tank. The feeder head provides adjacent port way entry into the hydraulic valve on the outlet of the hydraulic pumping unit and the high pressure waste carbon feed intake pump valve. The physical design structure configuration of the feeder head is manufactured so that upon reverse refilling with waste carbon and water material, the material easily refills the hydraulic chamber. Additionally, upon pumping waste material forward into the reaction chamber, the design structure facilitates this movement. Herein, the capacity of the feeder head is up to 400 bars. Subsequently, the feeder head is mechanically coupled a three-way feed valve, wherein the three-way feed valve is mainly used for two-way usage. Furthermore, a feed recharge cylinder is operatively coupled to the feeder head via the three-way feed valve. Herein, the feed recharge cylinder may have a capacity of 10 litres. In some embodiments, the feeder head is operatively coupled with a pressure isolating valve. Herein, the pressure isolating valve allows to perform maintenance without shutting any line. Thereafter, the pressure isolating valve is further connected to a pressure sensor, wherein the pressure sensor is controlled by the processing electronics module.

Optionally, the plug flow reactor is tubular in structure. Herein, the plug flow reactor comprises a conduit possessing an input end and an output end. Furthermore, the conduit may be made of stainless steel, or nickel-alloy composite stainless steel, or Inconel 741 stainless steel. Typically, the internal space of the conduit contains the mixture of waste carbon material for hydrothermal liquefaction to occur. Additionally, the mixture of waste carbon material flows from the input end of the conduit to the output end of the conduit.

**In** some embodiments, the hydraulic pumping unit comprises a double acting piston. Herein, the double acting piston moves and with each cycle a known volume of the mixture of waste carbon material and water is transported. Furthermore, the double acting piston comprises a first piston head and a second piston head. Herein, the first piston head may have a diameter of 200 millimetres and the second piston head may have a diameter of 100 millimetres. Additionally, a tally counter of the double piston movement corresponds to a shunted flow rate, depending on length of the tubular plug flow reactor and pre-designated temperature and pressure profiles. Moreover, an automatic valve actuator is interfaced with a thermocouple feedback start-stop regulatory mechanism which senses thermostatic control of pressure, temperature and flow rate according to desired values for the mixture of waste carbon material and water. In case the temperature of the mixture of waste carbon material and water is higher than required, the flow rate of the plug flow reactor may be increased. Conversely, in case the temperature of the mixture of waste carbon material and water is lower than required, the flow rate of the plug flow reactor may be decreased. Additionally, during the forward movement of the double acting piston, the mixture of waste carbon material and water is discharged from a feed cylinder into a discharge line. Simultaneously, a cylinder behind the double acting piston is being filled with the mixture of waste carbon material and water through an inlet valve of the cylinder.

The system comprises a preheater configured to increase temperature of the mixture of waste carbon material and water in the plug flow reactor to obtain waste flow. Herein, the preheater acts as a precursor to increase the temperature of the mixture of waste carbon material and water before entering hydrothermal reactor unit. Furthermore, preheating ensures that the mixture of waste carbon material and water is pre-heated to temperatures that do not compromise the integrity or durability of the valves or seals of hydraulic valves before heating it further in the hydrothermal reactor unit. Hence, the hydrothermal reactor unit need not expend much energy to increase the temperature of the mixture of waste carbon material and water.

Optionally, the preheater comprises a second plurality of heating formats to increase the temperature of the mixture of waste carbon material and water. Herein, the term *"plurality of heating formats"* refers to steam turbine waste heat, geothermal heat, waste heat from the exhaust gas internal combustion engines used in industries, solar heat, and waste heat produced during combustion of bio-crude. Furthermore, the plurality of heating formats may comprise gas and oil-based fuels with electrical and solar option modules.

There exists a myriad of heating applications and sources being heated. In the plug flow reactor system of the invention, the application of heating is simplified because it is heat from the outside going into the middle of the reactor. In some embodiments, the heat is conductive heat via electrical heating elements. In some embodiments, the heat is inductive heating acting via a magnetic interface mechanism directly onto the outside metal of the reaction chamber. In some embodiments, the heat is thermal and visible light concentrated by the focal point of a solar parabolic trough. In some embodiments, the heat is industrial exhaust waste heat from coal, oil, gas, or other fuel combustion. In some embodiments, the heat is geothermal heat from a hot spring, geyser or volcanic rock. In some embodiments, the heat is direct heat from combustion, rather than exhaust from combustion. The number of heating elements affects the rate at which the heater gets to the desired temperature, typically 350C.

Optionally, the preheater is configured to increase temperature of the mixture of waste carbon material and water up to 500 degrees Celsius. Herein, the preheater is mechanically coupled with the plug flow reactor. In some embodiments, the preheater is heated up to 350 degrees Celsius so that the mixture of waste carbon material and water require less supplementary heat to maintain at holding temperature for the duration of the hydrothermal liquefaction reaction. Subsequently, the mixture of waste carbon material and water present inside the preheater is transported to a hydrothermal reactor unit via the pressure created by the hydraulic pumping unit. The hydraulic pumping unit controls the flow rate of mixture throughout the plug flow reactor. In some embodiments, the input end of the conduit of the plug flow reactor acts as a preheater to rapidly increase the temperature of the conduit to 350 degrees Celsius. Furthermore, in some embodiments, the output end of the conduit of the plug flow reactor acts as a preheater to rapidly increase the temperature of the conduit to 350 degrees Celsius.

In some embodiments, the plug flow reactor comprises a cooling tank for cooling the products of the hydrothermal liquefaction reaction, Furthermore, a cooling tank may be used to thermally isolate the plug flow reactor. Additionally, the cooling tank may be operatively coupled with a chiller which operates at 4 degrees Celsius. Moreover, the cooling tank may be operatively coupled with a hydrothermal reactor unit. The cooling tank acts as a heat exchanger or heat transfer unit. The cooling tank at the output end of the hydrothermal liquefaction reactor collects heat from the output of the hydrothermal liquefaction reactor and recirculates it, returning it to the pre-heater. Advantageously, this means that both insulated heat and excessive waste latent heat are regenerated and reutilised within the reactor configuration. The cooling tank typically reduces the temperature of the waste carbon material (now converted into crude oil) from 350°C to < 80°C.

The system comprises a hydrothermal reactor unit configured to receive the waste flow from the preheater, wherein the hydrothermal reactor unit is configured to convert the waste flow into bio-crude and nutrients. Herein, the hydrothermal reactor unit is used to carry out hydrothermal reaction at high pressure and at a high temperature. Beneficially, the hydrothermal reactor unit reduces cycle times, reduces transfer compositions of the waste flow and increases productivities to procure better yields. Notably, the hydrothermal reactor unit is an adaptable research unit, wherein scientists may research hydrothermal liquefaction in a fully automatic microsystem. Furthermore, the hydrothermal reactor unit has a cooling unit, such as for example a fan, mechanically coupled on the outer periphery of the hydrothermal reactor unit. Herein, the fan is mechanically coupled as a heater present inside the hydrothermal reactor unit. Additionally, the hydrothermal reactor unit may comprise a main exhaust system on the top. Herein, the main exhaust system is a manual control vent for hot gases to flow out of the hydrothermal reactor unit. Moreover, the hydrothermal reactor unit comprises an inlet valve and an outlet valve, wherein the waste flow enters through the inlet valve, and post-hydrothermal liquefaction mixture leaves the hydrothermal reactor unit through the outlet valve.

Optionally, a temperature capacity of the hydrothermal reactor unit is 700 degrees Celsius, a pressure capacity of the hydrothermal reactor unit is 400 bars and flow rate capacity thereof is 100 kilograms per hour. Herein, the temperature capacity of the hydrothermal reactor unit of 700 degrees Celsius, the pressure capacity of the hydrothermal reactor unit of 400 bars and flow rate capacity of 100 kilograms per hour are designated interim parameters. Furthermore, higher efficiency and a more stable operation condition is achieved at the temperature capacity of 700 degrees Celsius and the pressure capacity of 400 bars for hydrothermal gasification. Specifically, water present in the waste flow alters its physical and chemical properties resulting in dissolving the waste flow and partially converting into bio-crude and nutrients.

Temperature may be recorded with a thermocouple sited on or within the metal of the hydrothermal reactor. In some embodiments, the thermocouple is placed between the aluminium block and the outside of the steel reactor. Pressure may be recorded with an in-line pressure gauge. For example, a T or X tubular connector where an appendage of a pressure gauge is connected. To avoid clogging with oil, a U-bend may be placed just before the gauge filled with water, so that only water gets into the gauge, not viscous oil. Flow rate is measured via the hydraulic pumping unit. In summary, as the piston moves forward, a ruler on the hydraulic piston measures its forward movement. The total volume of the piston stroke is known, so as a function of tubular volumetric capacity, and the time it takes for the piston to complete its stroke, the amount of waste carbon material processed by unit of time can be determined.

In some embodiments, the hydrothermal reactor unit comprises a heater for increasing the temperature of the waste flow using a plurality of heating formats. Herein, the plurality of heating formats is implemented in the same manner as the second plurality of heating formats. Additionally, the plurality of heating formats may further comprise steam turbine waste heat and/ or geothermal heat. Specifically, the steam turbine waste heat and or geothermal heat may be used as main functionality in upscaling of the present disclosure. Furthermore, the heater used is typically a pencil heater encased in an aluminium heater block so as to not let any of the heat escape. Additionally, the heater may be energized by a 5000 watts transformer which is connected to a source comprising voltage of 220 volts AC and current of 30 amperes. Moreover, the heater may be operatively coupled with the transformer via a switch block which is controlled by the processing electronics module. Furthermore, the plurality of heating formats may be used to rapidly increase the temperature of the waste flow up to 700 degrees Celsius. Additionally, the temperature of the waste flow is increased up to required temperatures for designated reactant profile. Subsequently, the temperature of the waste flow should be maintained at required holding temperature for the remainder of reaction phase time period.

Optionally, the plurality of heating formats in the hydrothermal reactor unit comprises at least one of waste heat from internal combustion engines, solar heat from solar concentrating parabolic troughs, and waste heat from combustion of bio-crude produced from hydrothermal liquefaction, or geothermal heat. Herein, the waste heat from the exhaust generator set of the internal combustion engine flows across feed coils of hydrothermal liquefaction into the preheater via an inlet. Furthermore, the generator set may have a power of 1 megawatt. Additionally, a coolant system may be mechanically coupled with the generator set. Subsequently, the temperature of the waste heat in the feed coils is increased up to 350 degrees Celsius. Furthermore, the waste heat may be passed through a bypass that is thermally controlled via a bypass thermal control to maintain the temperature constant at 350 degrees Celsius. Additionally, the waste heat may continue to flow towards a reformer zone, wherein the temperature is maintained at a constant temperature of 350 degrees Celsius. Consequently, the waste heat flows out with a temperature of 350 degrees Celsius, which is used as one of the plurality of heating formats. Notably, the waste heat flowing out of the preheater may be used by the heater to maintain the temperature of the hydrothermal reactor unit at 700 degrees Celsius. Furthermore, the solar heat is compatible with mass produced parabolic-trough solar concentrating systems. Furthermore, gas and oil-based fuels with electrical and solar option aggregate modules may also be used. Consequently, the plurality of heating formats may be used to raise the temperature of the hydrothermal reactor unit to 700 degrees Celsius via the heater. Herein, hydrothermal liquefaction may be carried at 700 degrees Celsius for optimum conversion of waste carbon material to bio-crude and nutrients. Additionally, waste carbon is formed during the formation of bio-crude via hydrothermal liquefaction. Subsequently, the waste carbon may be combusted as a source of heat and exhaust gas. Furthermore, this may be used as an input source of heat for hydrothermal liquefaction, thereby converting more waste carbon into a fuel source.

In an embodiment, a thermocouple is operatively coupled with the hydrothermal reactor unit. Herein, the thermocouple is controlled by the processing electronics module. Furthermore, the thermocouple may be used for temperatures ranging from 150 degrees Celsius up to 500 degrees Celsius. The temperature may for example be maintained from 150, 250, 350 or 450 degrees Celsius up to 250, 350, 450 or 500 degrees Celsius. Additionally, the thermocouple may work in conjunction with a switch block. The switch block is a thermostatically controlled electronic control system to ensure that the heating elements are on and off in line with a software algorithm programme to ensure homeostasis of temperature control as temperature either increases or falls above or below threshold limits.

In an embodiment, the system comprises a processing electronics module configured to regulate and control flow rates, temperatures and pressures in the system. Herein, the processing electronics module may be an Arduino^{®} based system. Furthermore, the processing electronics module ensures highly accurate dosing of mixture of the waste carbon material and water by low interference telemetry data signals. Herein, telemetry data signal is an automatic measurement and wireless transmission of data from the processing electronics module, wherein sensors measure either electrical telemetry data or physical telemetry data. Furthermore, the electrical telemetry data may be for example, voltage or electric current, and physical telemetry data may be for example, temperature or pressure. Additionally, the processing electronics module may be operatively coupled with the hydraulic pumping unit. Herein, the processing electronics module controls the pressure of the waste carbon material and water. Moreover, the processing electronics module may be electrically controlled via electrical telemetry data. Notably, the processing electronics module may be operatively coupled with the conduit which is configured to partially recirculate waste heat into the hydrothermal reactor unit. Herein, the volume and the temperature of the waste heat is controlled which is passing through the exhaust gas bypass system. The exhaust gas bypass system acts as a supplementary gas offtake to additionally control gas volumes and temperatures from exhaust gas. Beneficial features of the exhaust gas bypass system are that it prevents any increased back pressure on the engine which would otherwise detrimentally affect the engine combustion cycles of the generator. An adjacent flue gas conduit releases supplementary exhaust gas via a mechanical flap to ensure that in times of excessive exhaust gas production, the pressure differential between the exhaust and the generator engine are maintained at specified operational limits. Furthermore, the processing electronics module may be encased in a cabinet for structure and protection.

In an embodiment, a separation refining unit is connected to the cooling tank via a pressure regulating valve. Herein, the pressure of the waste flow is lowered before entering the separation refining unit using the processing electronics module. Furthermore, the separation refining unit comprises various technologies to affect outcome of the waste flow. Herein, the technologies may comprise gravimetric sedimentation, filtration, centrifugation and flocculation. Furthermore, all the technologies are handled with their own settings of processing electronics module. Additionally, the separation refining unit may comprise at least three refined outlets. Subsequently, the at least three refined outlets separate the waste flow in at least three storage tanks. Herein, the at least three storage tanks may be used for storing solid, liquid and gaseous waste flow.

The present disclosure also relates to the method as described above. Various embodiments and variants disclosed above apply *mutatis mutandis* to the method.

Optionally, the method comprises decreasing temperature and pressure of the bio-crude and nutrients.

Optionally, in the method, the plurality of heating formats comprises at least one of:
- waste heat from internal combustion engines;
- solar heat from solar concentrating parabolic troughs;
- waste heat from combustion of bio-crude produced.- steam turbine waste heat and or geothermal heat

Optionally, in the method, the preheater comprises a second plurality of heating formats to increase the temperature of the mixture of waste carbon material and water.

Optionally, the method comprises increasing the temperature of the waste flow up to 700 degrees Celsius and pressure thereof up to 400 bars.

Optionally, the method comprises increasing temperature of the mixture of waste carbon material and water up to 350 degrees Celsius.

### DETAILED DESCRIPTION OF THE DRAWINGS

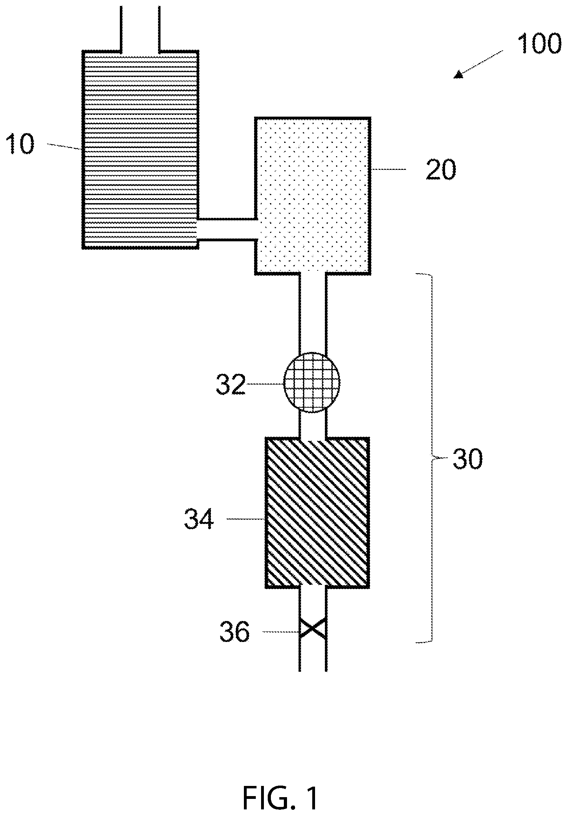

FIG.1 provides a schematic illustration of a system 100 of the invention. The system comprises a mixing and recirculation tank 10 for receiving waste carbon material. The waste carbon material is then transferred to a hydraulic pumping unit 20 where the waste carbon material is mixed with water. The hydraulic pumping unit 20 increases the pressure of the waste carbon material and water mixture before transfer of the mixture to the plug flow reactor 30. The plug flow reactor 30 provides a continuous system through which the waste carbon material and water mixture travels. The plug flow reactor 30 is configured to maintain the pressure of the waste carbon material and water mixture. The pressurised waste carbon material and water mixture travels to the preheater 32 which increases the temperature of the waste carbon material and water mixture to provide waste flow. The waste flow then enters the hydrothermal reactor unit 34 where the mixture is heated further to convert waste flow into bio-crude and nutrients. The plug flow reactor typically comprises a back pressure valve 36 configured to maintain the pressure within the plug flow reactor.

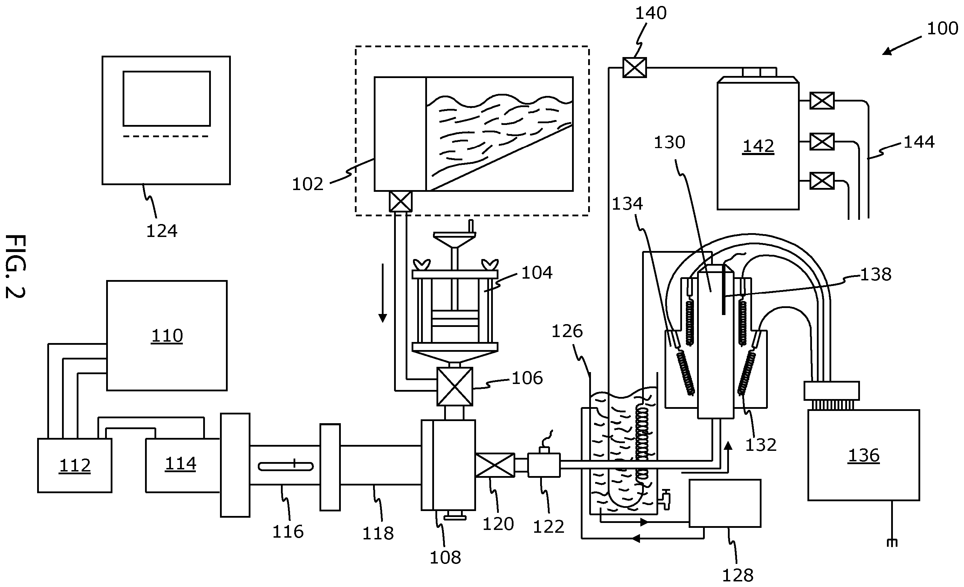

Referring to FIG. 2, a schematic illustration is shown depicting a system 100 for hydrothermal liquefaction, in accordance with an embodiment of the present disclosure. Herein, a mixing and recirculation tank 102 is configured to receive the waste carbon material to undergo hydrothermal liquefaction. The waste carbon material further moves towards a feed recharge cylinder 104. A three-way feed valve 106 is operatively coupled to the feed recharge cylinder 104 a feeder head 108. A hydraulic pumping unit 110 is operatively coupled to a flow control unit 112. The flow control unit 112 is connected to a hydraulic slave cylinder 114. A piston indicator 116 is operatively coupled with the hydraulic slave cylinder 114. A feed cylinder 118 is connected to the feeder head 108. A pressure isolating valve 120 is further connected to a pressure sensor 122. Herein, the pressure sensor 122 is controlled by a processing electronics module 124. A cooling tank 126 is used to thermally isolate the waste carbon material and water and uses a chiller 128. The chilling tank 126 is operatively coupled with a hydrothermal reactor unit 130. The hydrothermal reactor unit 130 comprises a heater 132 enclosed in an aluminium heater block 134. Furthermore, the heater 132 is energized by a transformer 136. Furthermore, a thermocouple 138 is operatively coupled with the hydrothermal reactor unit 130. Thereafter, a pressure regulating valve 140 is connected to a separation unit 142. The pressure regulating valve is a pressure gauge, connected in line with the output end of the hydrothermal reactor unit. The pressure gauge may contain a U-bend of compressible water prior to the gauge to insulate it against the hydrothermal liquefaction reactant output products. The separation unit 142 comprises refined outlet 144.

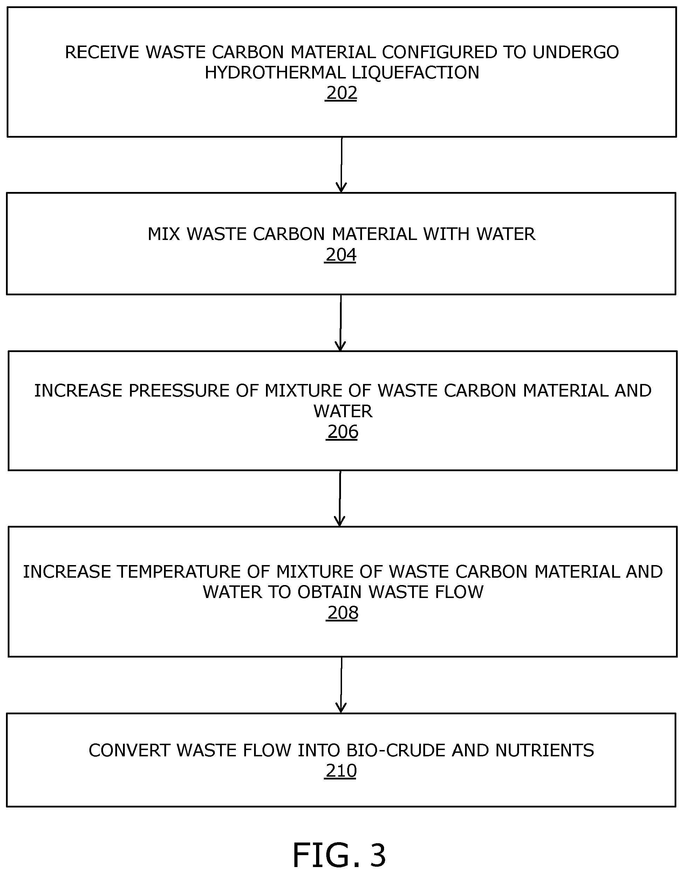

Referring to FIG. 3, illustrated is a flowchart depicting steps of a method for converting waste carbon material into bio-crude and nutrients using hydrothermal liquefaction, in accordance with an embodiment of the present disclosure. At a step 202, waste carbon material is received and is configured to undergo hydrothermal liquefaction. At a step 204, waste carbon material is mixed with water. At a step 206, pressure of a mixture of waste carbon material and water is increased. At a step 208, temperature of the mixture of waste carbon material and water is increased to obtain waste flow. At a step 210, the waste flow is converted into bio-crude and nutrients by increasing the temperature of the waste flow using a plurality of heating formats and configuring a conduit to partially recirculate waste heat into the waste flow.

Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A system for converting waste carbon material into bio-crude and nutrients using hydrothermal liquefaction, the system comprising:
- a mixing and recirculation tank configured to receive the waste carbon material to undergo hydrothermal liquefaction;
- a hydraulic pumping unit configured to mix waste carbon material with water and to increase pressure of the mixture of waste carbon material and water;
- a plug flow reactor configured to maintain the pressure of the mixture of the waste carbon material and water;
wherein the plug flow reactor forms a single pressure chamber continuum comprising:
- a preheater configured to increase temperature of the mixture of waste carbon material and water to obtain waste flow;
- a hydrothermal reactor unit configured to receive the waste flow from the preheater, wherein the hydrothermal reactor unit is configured to convert the waste flow into bio-crude and nutrients; and
- a back pressure valve positioned downstream of the hydrothermal reactor unit.

2. A system of claim 1, wherein the plug flow reactor is configured to enable continuous flow of the mixture of waste carbon material and water to the preheater and the hydrothermal reactor unit.

3. A system of claim 1 or claim 2, wherein the hydrothermal reactor unit comprises a heater for increasing the temperature of the waste flow using a plurality of heating formats.

4. A system of any of the preceding claims, wherein the hydrothermal reactor unit comprises a conduit configured to partially recirculate waste heat into the hydrothermal reactor unit.

5. A system of any of the preceding claims, further comprising a processing electronics module configured to regulate and control flowrates, temperatures and pressures in the system.

6. A system of any of claims 3-5, wherein the plurality of heating formats in the hydrothermal reactor unit comprises at least one of:
- steam turbine waste heat;
- geothermal heat;
- waste heat from internal combustion engines;
- solar heat from solar concentrating parabolic troughs;
- waste heat from combustion of bio-crude produced from hydrothermal liquefaction.

7. A system of any of the preceding claims, wherein:
(a) the preheater comprises a second plurality of heating formats to increase the temperature of the mixture of waste carbon material and water;
(b) the plug flow reactor is tubular in structure;
(c) the hydraulic pumping unit comprises a double acting piston; and/or
(d) a temperature capacity of the hydrothermal reactor unit is 700 degrees Celsius, a pressure capacity of the hydrothermal reactor unit is 400 bars and flow rate capacity thereof is 100 kilograms per hour.

8. A system of any of the preceding claims, wherein the preheater is configured to increase temperature of the mixture of waste carbon material and water to between 250 and 350 degrees Celsius.

9. A method for converting waste carbon material into bio-crude and nutrients using hydrothermal liquefaction, the method comprising
- receiving the waste carbon material configured to undergo hydrothermal liquefaction;
- mixing waste carbon material with water;
- increasing pressure of the mixture of waste carbon material and water using a hydraulic pumping unit to provide a pressurised mixture of waste carbon material and water;
- transferring the pressurised mixture of waste carbon material and water to a plug flow reactor, wherein the plug flow reactor forms a single pressure chamber continuum comprising a preheater, a hydrothermal reactor unit and a back pressure valve positioned downstream of the hydrothermal reactor unit, wherein the plug flow reactor is configured to maintain the pressure of the mixture of waste carbon material and water;
- increasing temperature of the mixture of waste carbon material and water in the preheater to obtain waste flow; and
- converting the waste flow into bio-crude and nutrients in the hydrothermal reactor unit by increasing the temperature of the waste flow.

10. A method of claim 9, wherein increasing the temperature of the waste flow comprises using a plurality of heating formats.

11. A method of claim 9 or claim 10, wherein the method comprises configuring a conduit to partially recirculate waste heat from the hydrothermal reactor unit into the waste flow.

12. A method of any of claims 9-11, further comprising decreasing temperature and pressure of the bio-crude and nutrients.

13. A method of any of claims 9-12, wherein the plurality of heating formats comprise at least one of:
- steam turbine waste heat;
- geothermal heat;
- waste heat from internal combustion engines;
- solar heat from solar concentrating parabolic troughs;
- waste heat from combustion of bio-crude produced.

14. A method of any of claims 9-13, wherein the preheater comprises a second plurality of heating formats to increase the temperature of the mixture of waste carbon material and water.

15. A method of any of claims 9-14, wherein the method comprises increasing temperature of the mixture of waste carbon material and water to between 250 and 350 degrees Celsius.

## Patentansprüche

1. System zur Umwandlung von Kohlenstoffabfallmaterial in Biorohöl und Nährstoffe unter Verwendung von hydrothermaler Verflüssigung, wobei das System umfasst:
- einen Misch- und Rezirkulationstank, der dazu konfiguriert ist, das Kohlenstoffabfallmaterial aufzunehmen, um einer hydrothermalen Verflüssigung unterzogen zu werden;
- eine Hydraulikpumpeneinheit, die dazu konfiguriert ist, Kohlenstoffabfallmaterial mit Wasser zu mischen und einen Druck des Gemischs von Kohlenstoffabfallmaterial und Wasser zu erhöhen;
- einen Rohrreaktor, der dazu konfiguriert ist, den Druck des Gemischs des Kohlenstoffmaterials und des Wassers aufrechtzuerhalten;
wobei der Rohrreaktor ein einziges Druckkammerkontinuum bildet, umfassend:
- einen Vorerhitzer, der dazu konfiguriert ist, eine Temperatur des Gemischs von Kohlenstoffabfallmaterial und Wasser zu erhöhen, um einen Abfallstrom zu erhalten;
- eine hydrothermale Reaktoreinheit, die dazu konfiguriert ist, den Abfallstrom von dem Vorerhitzer zu erhalten, wobei die hydrothermale Reaktoreinheit dazu konfiguriert ist, den Abfallstrom in Biorohöl und Nährstoffe umzuwandeln; und
- ein Rückschlagventil, das stromabwärts von der hydrothermalen Reaktoreinheit positioniert ist.

2. System nach Anspruch 1, wobei der Rohrreaktor dazu konfiguriert ist, einen kontinuierlichen Strom des Gemischs von Kohlenstoffabfallmaterial und Wasser zu dem Vorerhitzer und der hydrothermalen Reaktoreinheit zu ermöglichen.

3. System nach Anspruch 1 oder Anspruch 2, wobei die hydrothermale Reaktoreinheit einen Erhitzer zum Erhöhen der Temperatur des Abfallstroms unter Verwendung einer Vielzahl von Heizformaten umfasst.

4. System nach einem der vorhergehenden Ansprüche, wobei die hydrothermale Reaktoreinheit eine Leitung umfasst, die dazu konfiguriert ist, Abwärme partiell in die hydrothermale Reaktoreinheit zu rezirkulieren.

5. System nach einem der vorhergehenden Ansprüche, ferner umfassend ein Verarbeitungselektronikmodul, das dazu konfiguriert ist, Strömungsraten, Temperaturen und Drücke in dem System zu regeln und zu steuern.

6. System nach einem der Ansprüche 3-5, wobei die Vielzahl von Heizformaten in der hydrothermalen Reaktoreinheit mindestens eine der folgenden umfasst:
- Dampfturbinenabwärme;
- Erdwärme;
- Abwärme von Verbrennungsmotoren;
- Solarwärme von Sonnenenergie bündelnden Parabolrinnen;
- Abwärme von einer Verbrennung von aus hydrothermaler Verflüssigung produziertem Biorohöl.

7. System nach einem der vorhergehenden Ansprüche, wobei:
(a) der Vorerhitzer eine zweite Vielzahl von Heizformaten umfasst, um die Temperatur des Gemischs von Kohlenstoffabfallmaterial und Wasser zu erhöhen;
(b) der Rohrreaktor eine rohrförmige Struktur aufweist;
(c) die Hydraulikpumpeneinheit einen doppeltwirkenden Kolben umfasst; und/oder
(d) eine Temperaturkapazität der hydrothermalen Reaktoreinheit 700 Grad Celsius beträgt, eine Druckkapazität der hydrothermalen Reaktoreinheit 400 Bar beträgt und eine Strömungsratenkapazität davon 100 Kilogramm pro Stunde beträgt.

8. System nach einem der vorhergehenden Ansprüche, wobei der Vorerhitzer dazu konfiguriert ist, eine Temperatur des Gemischs von Kohlenstoffabfallmaterial und Wasser auf zwischen 250 und 350 Grad Celsius zu erhöhen.

9. Verfahren zur Umwandlung von Kohlenstoffabfallmaterial in Biorohöl und Nährstoffe unter Verwendung von hydrothermaler Verflüssigung, wobei das Verfahren umfasst:
- Erhalten des Kohlenstoffabfallmaterials, das dazu konfiguriert ist, einer hydrothermalen Verflüssigung unterzogen zu werden;
- Mischen von Kohlenstoffabfallmaterial mit Wasser;
- Erhöhen eines Drucks des Gemischs von Kohlenstoffabfallmaterial und Wasser unter Verwendung einer Hydraulikpumpeneinheit, um ein unter Druck stehendes Gemisch von Kohlenstoffabfallmaterial und Wasser bereitzustellen;
- Überführen des unter Druck stehenden Gemischs von Kohlenstoffabfallmaterial und Wasser in einen Rohrreaktor, wobei der Rohrreaktor ein einziges Druckkammerkontinuum bildet, umfassend einen Vorerhitzer, eine hydrothermale Reaktoreinheit und ein Rückschlagventil, das stromabwärts von der hydrothermalen Reaktoreinheit positioniert ist, wobei der Rohrreaktor dazu konfiguriert ist, den Druck des Gemischs von Kohlenstoffabfallmaterial und Wasser aufrechtzuerhalten;
- Erhöhen einer Temperatur des Gemischs von Kohlenstoffabfallmaterial und Wasser in dem Vorerhitzer, um einen Abfallstrom zu erhalten; und
- Umwandeln des Abfallstroms in Biorohöl und Nährstoffe in der hydrothermalen Reaktoreinheit durch Erhöhen der Temperatur des Abfallstroms.

10. Verfahren nach Anspruch 9, wobei das Erhöhen der Temperatur des Abfallstroms ein Verwenden einer Vielzahl von Heizformaten umfasst.

11. Verfahren nach Anspruch 9 oder Anspruch 10, wobei das Verfahren ein Konfigurieren einer Leitung umfasst, um Abwärme partiell von der hydrothermalen Reaktoreinheit in den Abfallstrom zu rezirkulieren.

12. Verfahren nach einem der Ansprüche 9-11, ferner umfassend ein Verringern einer Temperatur und eines Drucks des Biorohöls und der Nährstoffe.

13. Verfahren nach einem der Ansprüche 9-12, wobei die Vielzahl von Heizformaten mindestens eine der folgenden umfasst:
- Dampfturbinenabwärme;
- Erdwärme;
- Abwärme von Verbrennungsmotoren;
- Solarwärme von Sonnenenergie bündelnden Parabolrinnen;
- Abwärme von einer Verbrennung von produziertem Biorohöl.

14. Verfahren nach einem der Ansprüche 9-13, wobei der Vorerhitzer eine zweite Vielzahl von Heizformaten umfasst, um die Temperatur des Gemischs von Kohlenstoffabfallmaterial und Wasser zu erhöhen.

15. Verfahren nach einem der Ansprüche 9-14, wobei das Verfahren ein Erhöhen einer Temperatur des Gemischs von Kohlenstoffabfallmaterial und Wasser auf zwischen 250 und 350 Grad Celsius umfasst.

## Revendications

1. Système destiné à convertir un matériau carboné résiduel en biobrut et en nutriments en utilisant la liquéfaction hydrothermale, le système comprenant :
- une cuve de mélange et de recirculation configurée pour recevoir le matériau carboné résiduel pour qu'il subisse une liquéfaction hydrothermale ;
- une unité de pompage hydraulique configurée pour mélanger un matériau carboné résiduel avec de l'eau et pour augmenter la pression du mélange de matériau carboné résiduel et d'eau ;
- un réacteur à écoulement piston configuré pour maintenir la pression du mélange du matériau carboné résiduel et d'eau ;
dans lequel le réacteur à écoulement piston forme un continuum de chambre de pression unique comprenant :
- un préchauffeur configuré pour augmenter la température du mélange de matériau carboné résiduel et d'eau afin d'obtenir un écoulement résiduel ;
- une unité de réacteur hydrothermal configurée pour recevoir l'écoulement résiduel provenant du préchauffeur, dans lequel l'unité de réacteur hydrothermal est configurée pour convertir l'écoulement résiduel en biobrut et en nutriments ; et
- une vanne de contre-pression positionnée en aval de l'unité de réacteur hydrothermal.

2. Système selon la revendication 1, dans lequel le réacteur à écoulement piston est configuré pour permettre un écoulement continu du mélange de matériau carbonée résiduelle et d'eau vers le préchauffeur et l'unité de réacteur hydrothermal.

3. Système selon la revendication 1 ou la revendication 2, dans lequel l'unité de réacteur hydrothermal comprend un dispositif de chauffage destiné à augmenter la température de l'écoulement résiduel en utilisant une pluralité de formats de chauffage.

4. Système selon l'une quelconque des revendications précédentes, dans lequel l'unité de réacteur hydrothermal comprend un conduit configuré pour faire recirculer partiellement de la chaleur résiduelle dans l'unité de réacteur hydrothermal.

5. Système selon l'une quelconque des revendications précédentes, comprenant en outre un module électronique de traitement configuré pour réguler et commander les débits, les températures et les pressions dans le système.

6. Système selon l'une quelconque des revendications 3 à 5, dans lequel la pluralité de formats de chauffage dans l'unité de réacteur hydrothermal comprend au moins l'un des éléments suivants :
- la chaleur résiduelle de turbine à vapeur ;
- la chaleur géothermique ;
- la chaleur résiduelle de moteurs à combustion interne ;
- la chaleur solaire de goulottes paraboliques à concentration solaire ;
- la chaleur résiduelle provenant de la combustion de biobrut produit par liquéfaction hydrothermale.

7. Système selon l'une quelconque des revendications précédentes, dans lequel :
(a) le préchauffeur comprend une deuxième pluralité de formats de chauffage pour augmenter la température du mélange de matériau carboné résiduel et d'eau ;
(b) le réacteur à écoulement piston est de structure tubulaire ;
(c) l'unité de pompage hydraulique comprend un piston à double action ; et/ou
(d) une capacité de température de l'unité de réacteur hydrothermal est de 700 degrés Celsius, une capacité de pression de l'unité de réacteur hydrothermal est de 400 bars et la capacité de débit de celle-ci est de 100 kilogrammes par heure.

8. Système selon l'une quelconque des revendications précédentes, dans lequel le préchauffeur est configuré pour augmenter la température du mélange de matériau carboné résiduel et d'eau jusqu'à entre 250 et 350 degrés Celsius.

9. Procédé destiné à convertir un matériau carboné résiduel en biobrut et en nutriments en utilisant la liquéfaction hydrothermale, le procédé comprenant
- la réception du matériau carboné résiduel configuré pour subir une liquéfaction hydrothermale ;
- le mélange d'un matériau carboné résiduel avec de l'eau ;
- l'augmentation de la pression du mélange de matériau carboné résiduel et d'eau à l'aide d'une unité de pompage hydraulique pour fournir un mélange pressurisé de matériau carboné résiduel et d'eau ;
- le transfert du mélange pressurisé de matériau carboné résiduel et d'eau vers un réacteur à écoulement piston, dans lequel le réacteur à écoulement piston forme un continuum de chambre de pression unique comprenant un préchauffeur, une unité de réacteur hydrothermal et une vanne de contre-pression positionnée en aval de l'unité de réacteur hydrothermal, dans lequel le réacteur à écoulement piston est configuré pour maintenir la pression du mélange carboné résiduel et d'eau ;
- l'augmentation de la température du mélange de matériau carboné résiduel de carboné et d'eau dans le préchauffeur pour obtenir un écoulement résiduel ; et
- la conversion de l'écoulement résiduel en bio-brut et en nutriments dans l'unité de réacteur hydrothermal en augmentant la température de l'écoulement résiduel.

10. Procédé selon la revendication 9, dans lequel l'augmentation de la température de l'écoulement résiduel comprend l'utilisation d'une pluralité de formats de chauffage.

11. Procédé selon la revendication 9 ou la revendication 10, dans lequel le procédé comprend la configuration d'un conduit pour faire recirculer partiellement la chaleur résiduelle de l'unité de réacteur hydrothermal dans l'écoulement résiduel.

12. Procédé selon l'une quelconque des revendications 9 à 11, comprenant en outre la diminution de la température et de la pression du biobrut et des nutriments.

13. Procédé selon l'une quelconque des revendications 9 à 12, dans lequel la pluralité de formats de chauffage comprend au moins l'un des éléments suivants :
- la chaleur résiduelle de turbine à vapeur ;
- la chaleur géothermique ;
- la chaleur résiduelle de moteurs à combustion interne ;
- la chaleur solaire de goulottes paraboliques à concentration solaire ;
- la chaleur résiduelle provenant de la combustion de biobrut produit.

14. Procédé selon l'une quelconque des revendications 9 à 13, dans lequel le préchauffeur comprend une deuxième pluralité de formats de chauffage pour augmenter la température du mélange de matériau carboné résiduel et d'eau.

15. Procédé selon l'une quelconque des revendications 9 à 14, dans lequel le procédé comprend l'augmentation de la température du mélange de matériau carboné résiduel et d'eau entre 250 et 350 degrés Celsius.
